# EUROPEAN PATENT APPLICATION

(11) **EP 2 348 140 A1**
(43) Date of publication of application: **27.07.2011**
(21) Application number: 08877096.1
(22) Date of filing: 26.09.2008
(51) Int. Cl.: C23F 13/00, B32B 7/02

(54) **MULTILAYER MATERIAL WITH ENHANCED CORROSION RESISTANCE (VARIANTS) AND METHODS FOR PREPARING SAME**

(71) Applicant: Rozen, Andrei Evgenievich, Penzenskaya obl. 442965 (RU)
(72) Inventor: LOS, Irina Sergeevna, Penza 440026 (RU); PERVUKHIN, Leonid Borisovich, Moskovskaya obl. 142432 (RU); PERELYGIN, Jury Petrovich, Penza 440062 (RU); GORDOPOLOV, Jury Alexandrovich, Moskovskaya obl. 142432 (RU); PERVUKHINA, Olga Leonidovna, Moskovskaya obl. 142432 (RU); KIRY, Gennady Vladimirovich, Moscow 123103 (RU); ABRAMOV, Pavel Ivanovich, Moscow 123103 (RU); USATY, Sergei Gennadievich, Penzenskaya obl. 442965 (RU); KRYUKOV, Dmitry Borisovich, Penza 440062 (RU); DENISOV, Igor Vladimirovich, Moskovskaya obl. 142432 (RU); ROZEN, Andrei Andreevich, Penzenskaya obl. 442965 (RU)
(74) Representative: Sloboshanin, Sergej
(86) International application number: PCT/RU2008/000620
(87) International publication number: WO 2010/036139

(57) **Abstract**

The present invention relates to the development of variants of multilayer structural materials with enhanced corrosion resistance, including successively connected outer main layers which directly contact corrosive operating environments on one or both sides of the multilayer material and, disposed therebetween, alternating internal main and internal sacrificial layers. The main layers are made of metallic materials which are **characterized by** a state of passivity over a prolonged period with subsequent development therein of pitting-type corrosion, while the internal sacrificial layers, which contact the corrosive operating environment as deep foci of pitting corrosion develop in the preceding outer and internal main layers, are **characterized by** the development of general corrosion and have a protective action in relation to the outer and internal main layers. Methods for preparing such materials are proposed.

## Description

### Field of the invention

The invention relates to electrochemistry, material studies, and metallurgy, in particular, to structural materials having high corrosion resistance and high mechanical properties, and more specifically, to multilayer structural metal materials and methods for producing the same.

### Background of the invention

Up to the present time, corrosion resistance of structural metal materials was enhanced by developing expensive single-layer structural materials or multilayer materials using metals and alloys thereof as layers making up such material and having high corrosion resistance in corrosive environments. An abstract corrosive environment was thought to be an operating environment without regard for the magnitude of its corrosive effect or composition, rather than a specific environment in which such material was to be used in contact on one side or on both sides thereof. Consideration for the properties of the environment in selecting components of multilayer material, though, facilitates an optimal choice of multilayer material components.

Known in the art is a method for producing a multilayer material and a multilayer material obtained by explosion bonding of at least two cladding layers and an intermediate and backer layers (U.S. Patent No. 5,323,955, A1). The two cladding layers are selected from a group of materials having high corrosion resistance, including Mo, W, Re, Ru, Pa, Pt, Au, Ag, and their alloys. The intermediate layer is made of a material selected from the group comprising copper, silver, tantalum, and nickel alloys. The backer layer is made of a material selected from the group comprising low-alloyed steel, stainless steel, nickel, copper, aluminum, titanium, and their alloys.

Also known in the art is a three-layered metal material produced by explosion welding of three layers: a first layer of steel, a second layer of nickel and copper, containing 65% to 75% of copper and 35% to 25% of nickel, and a layer of titanium adjoining the layer of nickel and copper (U.S. Patent No. 5,190,831, A1).

A further multilayer material (U.S. Patent No. 4,839,242, A1) known in the art comprises a layer of steel base metal, a layer of nickel or nickel alloy bonded to the steel base layer, a layer of low-carbon ferrous metal containing at most 0.01% of carbon by weight and bonded to he nickel layer, and a cladding layer of a titanium-based material that is bonded to the layer of low-carbon ferrous alloy.

Materials of intermetallic compounds also known in the art contain a substrate of martensite stainless steel having a Vickers hardness of 400 MPa or 400 HV, or more, coated, for example, with a layer of titanium or a layer of titanium alloy through an intermediate layer made, for example, of a material selected from the group including nickel, iron, and copper-nickel alloys, and also known is a method for producing these materials (U.S. Patent No. 6,194,088, A1). The substrate may be provided with cladding such as a hard film, the top surface of which serves as the outer layer of an intermetallic compound comprising compounds selected from the group containing a Ti-Ni intermetallic compound, a Ti-Fe intermetallic compound, and a mixture of a Ti-Ni intermetallic compound and a Ti-Cu intermetallic compound. Moreover, the cladding may consist of several layers. For example, the cladding may have an internal layer of TiF₂ and an external layer of TiFe, or have an internal layer of TiC and an external layer of TiFe, or have a lower level of TiNi and an external layer of TiNi₃, or have a lower level of TiNi and an external layer of TiCu. Moreover, said material may be hardened by quench hardening to the hardness of stainless steel and a hard film of an intermetallic titanium compound is formed. The quench hardening procedure comprises heating the composite to a temperature of 900°C to 1,150°C for 30 seconds to 5 minutes, followed by cooling at a rate of 1°C/sec or more.

Still another method known in the art is used for producing three-layer strips, substantially in rolls, having a main carbon steel layer that is plated on both sides with corrosion-resistant alloys of austenitic class steels (SU Patent No. 1,447,612, A1). A three-layer blank is produced by surfacing or explosion welding, and the blank is then hot-rolled at a temperature of 910°C to 950°C, followed by cooling at a rate of 10°C to 100°C/sec.

A material produced by bonding cold-rolled plates of ferrite stainless steel or austenitic stainless steel to a low-carbon steel plate (JP Patent No. 6,293,978, B) is the closest prior art of the present invention. The surface layer of stainless steel is covered with a layer of tin or tin-lead alloy 0.1 to 10.0 µm thick. Pitting corrosion of stainless steel developing during operation in a salt environment is suppressed and retarded by electrochemical corrosion of the external protectors owing to the permittivity of tin or tin-lead alloy. The protective layers of the above composition cannot be used for technological reasons for protecting other metal materials and alloys, for example, nickel or titanium alloys, because of low adhesion of tin and lead to these alloys.

The above inventions were developed without regard for the properties of operating environments, in contact with which the resultant multilayer material is operated, for which reason the properties of the layers making up the multilayer material cannot be used with desired effect, for example, for reducing its thickness and costs.

### Summary of the invention

It is an object of the invention to develop a structural material of enhanced corrosion resistance that can operate in contact on one side or on both sides thereof with corrosive environments of identical or different activity.

The invention was aimed at developing a material of enhanced corrosion resistance that has a multilayer structure containing successively connected outer main layers and alternating internal main and internal sacrificial layers disposed therebetween, wherein the outer main layers in direct contact with the corrosive environment on one side or on both sides of the material and the internal main layers could remain in a state of passivity for a long time such that corrosion developing therein would be pitting-type corrosion, and the internal sacrificial layers in contact with the operating corrosive environment could remain in a state of general corrosion for a long time as deep pitting corrosion focuses develop in the preceding outer and internal main layers and could have a protective effect in respect of the outer and internal main layers. The invention was also aimed at developing methods for producing such materials.

The aim of the invention was achieved by developing a variant of multilayer material of enhanced corrosion resistance containing, in accordance with the invention, alternating odd and even layers placed on one another and joined by continuous permanent connection such that the material is suitable for operation in contact, on one side or on two sides thereof, with an operating environment containing aqueous solutions of alkalis, acid salts or acids having anions that are not oxidants, said material having odd layers as the main layers and even layers that are sacrificial layers, said material further comprising:
- odd outer and internal layers of metals or alloys that have, in contact with said operating environment, a stationary electrochemical potential ranging from the electrochemical overall potential to the electrochemical potential of repassivation; and
- even internal layers of metals or alloys that have, in contact with said operating environment, a stationary electrochemical potential lower than the stationary electrochemical potential of adjacent odd layers in the same conditions.

Furthermore, the aim of the invention was achieved by developing a variant of multilayer material of enhanced corrosion resistance containing, in accordance with the invention, alternating odd and even layers placed on one another and joined through continuous permanent connection such that the material is suitable for operation in contact, on one side or on both sides thereof, with an operating environment containing aqueous solutions of alkalis, acid salts or acids having anions that are oxidants, said material having odd layers are that are main layers and even layers that are sacrificial layers, said material further comprising:
- odd outer and internal layers of metals or alloys that have, in contact with said operating environment, a stationary electrochemical potential ranging from the electrochemical overall potential to the electrochemical potential of repassivation; and
- even internal sacrificial layers of metals or alloys that have, in contact with said operating environment, a stationary electrochemical potential that is higher than the electrochemical potential of the outer layer metal or alloy in the same conditions and ranges from the electrochemical overall potential of the outer layer material to the electrochemical potential of repassivation of the outer layer material, said metals or alloys having a lower hydrogen overvoltage than the materials of the adjacent odd layers.

Also, the aim of the invention was achieved by developing a variant of multilayer material of enhanced corrosion resistance containing, in accordance with the invention, alternating even and odd layers joined through continuous permanent connection such that the material is suitable for operation simultaneously in contact between the first odd outer layer and a first operating environment containing aqueous solutions of alkalis, acid salts or acids having anions that are not oxidants and in contact between the second odd outer layer and a second operating environment containing aqueous solutions of alkalis, acid salts or acids having anions that are oxidants, said material having odd layers that are main layers and even layers that are sacrificial layers, said material further containing:
- a first odd outer layer and an odd internal layer nearest it, both made of metals or alloys having, in contact with a presumed first operating environment, a stationary electrochemical potential ranging from the electrochemical overall potential to the electrochemical potential of repassivation;
- an even internal layer adjoining the first odd outer layer and made of metals or alloys, said even internal layer having, in contact with the presumed first operating environment, a stationary electrochemical potential lower than the stationary electrochemical potential of the adjacent odd layers in the same conditions;
- a second odd layer and an odd internal layer nearest it, both made of metals or alloys, having, in contact with a presumed second operating environment, a stationary electrochemical potential ranging from the electrochemical overall potential to the electrochemical potential of repassivation; and
- the even internal layer adjoining the second odd outer layer and the other even layers adjoining the odd internal layers and made of metals or alloys having, in contact with the second presumed operating environment, a stationary electrochemical potential that is higher than the electrochemical potential of the metal or alloy of the second outer layer in the same conditions and has a value ranging from the electrochemical overall potential of the second outer layer material to the electrochemical potential of repassivation of the second outer layer material, and also has a lower hydrogen overvoltage than the materials of the adjacent odd layers.

It is also possible, according to the invention, for the multilayer materials to further have a plating layer of oxidized aluminum on the outer layer.

It is further possible, according to the invention, for the multilayer materials to be made, according to the invention, in the form of sheets, plates, ribbons, strips, L-bars, channel bars, 1-bars, disks, rods of various shapes, pipes of various shapes, rings, open-shape structural products, or closed solid-shape products, or hollow-shape design outlines.

The aim of the invention was also achieved by developing a method for producing a multilayer material of enhanced corrosion resistance comprising, according to the invention, producing a continuous permanent connection of layers made of metals and/or their alloys and placed on one another, said method being designed to produce a multilayer material of enhanced corrosion resistance in contact, on one side or on both sides thereof, with an operating environment containing aqueous solutions of alkalis, acid salts or acids having anions that are not oxidants, such that:
- the material of odd layers comprises metals or alloys having, in contact with the presumed operating environment, a stationary electrochemical potential ranging from the electrochemical overall potential to the electrochemical potential of repassivation; and
- the material of even layers comprises metals or alloys having, in contact with said operating environment, a stationary electrochemical potential lower than the stationary electrochemical potential of the adjacent odd layers in the same conditions.

In addition, the object of the invention was achieved by developing a method for producing a multilayer material of enhanced corrosion resistance comprising, according to the invention, forming a continuous permanent connection of layers made of metals and/or their alloys and placed on one another, said method being designed to produce a multilayer material of enhanced corrosion resistance in contact, on one side or on both sides thereof, with an operating environment containing aqueous solutions of alkalis, acid salts or acids having anions that are oxidants, such that:
- the material of the odd outer and internal layers comprises metals or alloys having, in contact with a presumed operating environment, a stationary electrochemical potential ranging from the electrochemical overall potential to the electrochemical potential of repassivation; and
- the material of even internal layers comprises metals or alloys having, in contact with said operating environment, a stationary electrochemical potential that is higher than the electrochemical potential of the outer layer metal or alloy in the same conditions and has a value ranging from the electrochemical overall potential of the outer layer material to the electrochemical potential of repassivation of the outer layer material, and also having a lower hydrogen overvoltage than the materials of the odd layers.

Further, the object of the invention was achieved by developing a method for producing a multilayer material of enhanced corrosion resistance comprising, according to the invention, forming a continuous permanent connection of layers made of metals and/or their alloys and placed on one another, said method being adapted for producing a multilayer material of enhanced corrosion resistance in simultaneous contact between a first outer layer and a first operating environment containing aqueous solutions of alkalis, acid salts or acids having anions that are not oxidants and contact between a second outer layer and a second operating environment containing aqueous solutions of alkalis, acid salts or acids having anions that are oxidants, said continuous permanent connection of materials having at least five layers, such that:
- the material of the first outer layer comprises metals or alloys having, in contact with the presumed first operating environment, a stationary electrochemical potential ranging from the electrochemical overall potential to the electrochemical potential of repassivation;
- the material of the even internal layer adjoining the first outer layer comprises metals or alloys having, in contact with the presumed first operating environment, a stationary electrochemical potential that is lower than the stationary electrochemical potential of the adjacent odd layers in the same conditions;
- the material of the second outer layer comprises metals or alloys having, in contact with the presumed second operating environment, a stationary electrochemical potential ranging from the electrochemical overall potential to the electrochemical potential of repassivation; and
- the material of the even internal layer adjoining the second outer layer and the material of the even layers adjoining the odd internal layers comprise metals or alloys having, in contact with the presumed second operating environment, a stationary electrochemical potential that is higher than the electrochemical potential of the metal or alloy of the second outer layer in the same conditions and has a value ranging from the electrochemical overall potential of the material of the second outer layer to the electrochemical potential of repassivation of the material of the second outer layer, said metals or alloys having a lower hydrogen overvoltage than the materials of the adjacent odd layers.

Furthermore, it is reasonable, according to the invention to use materials of the even layers that are metals or alloys further capable, in contact with the presumed operating environment, of forming corrosion products of a larger volume than the volume of the metal or alloy in the layer before corrosion.

Moreover, as a multilayer material is produced, according to the invention, for operation in simultaneous contact on both sides thereof with a first and second operating environments, it is possible to form a continuous permanent connection of the layers of materials by joining one of the outer layers of the first multilayer material designed for operation in contact on both sides thereof with the first operating environment to one of the outer layers of the second multilayer material designed for operation in contact on both sides thereof with the second operating environment.

Also in accordance with the invention, it is possible to form said continuous permanent connection between said even and odd layers by explosion welding and/or diffusion welding in vacuum, or in reducing gases; and/or high-frequency welding; and/or welding by rolling; and/or manual arc surfacing; and/or mechanized surfacing with a consumable electrode by continuous or flux-core wire in inert gases and mixtures; and/or automatic argon arc surfacing; and/or automatic surfacing by ribbon electrode under flux; and/or automatic surfacing by a wire electrode under flux; and/or automatic surfacing by flux-core wire in active or inert gases, or their mixtures; and/or automatic surfacing by self-protecting flux-core wire or ribbon; and/or electroslag surfacing; and/or plasma surfacing with a solid-core or flux-core wire; and/or gas surfacing; and/or induction heating surfacing.

It is also possible, in accordance with the invention, to further clad the outer layer of the resultant multilayer material with aluminum, preferably by explosion cladding, and then oxidize the resultant cladding layer, preferably by micro-arc oxidization.

According to the invention, it is also possible to produce multilayer materials in the form of sheets, plates, ribbons, strips, L-bars, channel bars, 1-bars, disks, rods of various shapes, pipes of various shapes, rings, open-shape structural products, or closed solid-shape products, or hollow-shape design outlines.

### Brief description of the drawings

The invention will further be explained with reference to the description of variants of multilayer materials of enhanced corrosion resistance according to the invention, and examples illustrating the method for producing multilayer materials according to the invention and the drawings attached, wherein:

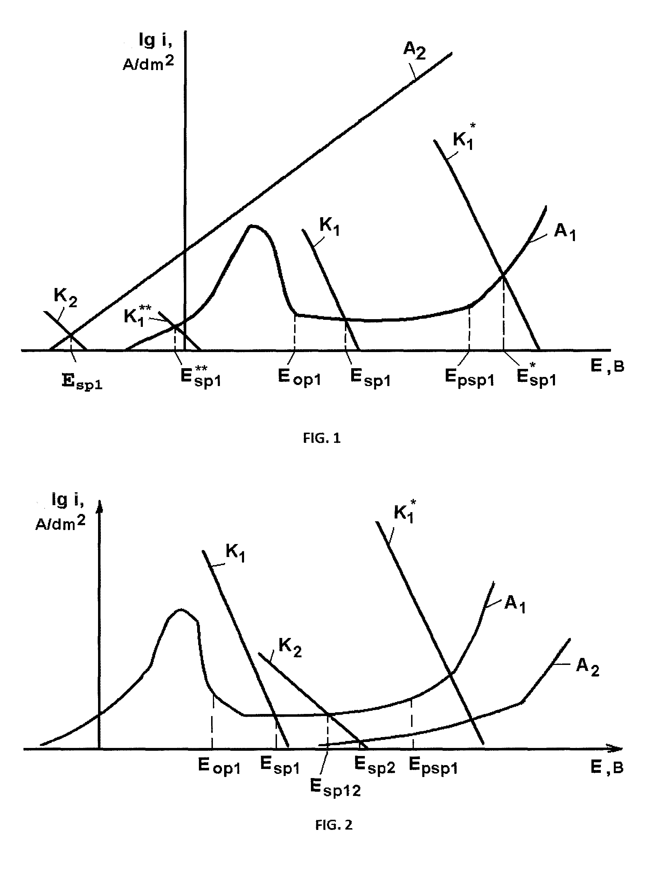

FIG. 1 is a diagrammatic view of anodic and cathodic polarization curves of the outer main layer of multilayer material according to the invention, for a variant of the outer layer in contact with a corrosive operating environment containing aqueous solutions of alkalis, acid salts or acids having anions that are not oxidants, and an internal sacrificial layer adjoining them; and
FIG. 2 is a diagrammatic view of anodic and cathodic polarization curves of the outer main layer of multilayer material according to the invention, for a variant of the outer layer in contact with a corrosive operating environment containing aqueous solutions of alkalis, acid salts or acids having anions that are oxidants, and an internal sacrificial layer adjoining them.
The examples following below do not diminish the possibilities of the invention and do not go beyond the scope of the claims.

### Description of the preferred embodiments of the invention

A multilayer material of enhanced corrosion resistance according to the invention may be produced by a method of the invention that comprises forming consecutively a continuous permanent connection between the main and sacrificial layers of metals and/or alloys thereof that have specific properties in contact with operating environments and are placed layer upon layer.

Such connections may be produced by existing industrial techniques, for example, according to the invention, by explosion welding and/or diffusion welding in vacuum, in inert gases or reducing gases; and/or high-frequency welding; and/or welding by rolling; and/or manual arc surfacing; and/or mechanized surfacing with a consumable electrode or solid or flux-core wire in inert gases and mixtures; and/or automatic argon arc surfacing; and/or automatic surfacing by ribbon electrode under flux; and/or automatic surfacing by a wire electrode under flux; and/or automatic surfacing by flux-core wire in active or inert gases, or their mixtures; and/or automatic surfacing by self-protecting flux-core wire or ribbon; and/or electroslag surfacing; and/or plasma surfacing with a solid-core or flux-core wire; and/or gas surfacing; and/or induction heating surfacing.

Also according to the invention, multilayer material may be produced in the form of a ready item, such as a pipe, disk, items of complex three-dimensional configuration, and items of varied cross-sectional shape, solid or hollow. In need, an item produced from multilayer material, for example, a plate, ribbon, sheet, or pipe, may be cold- or hot-rolled to give it desired dimensions.

Further, it is possible, according to the invention, to clad the outer layer of the resultant multilayer material additionally with aluminum, preferably by explosion cladding, and then oxidize the cladding layer bonded on, preferably by micro-arc oxidization.

The method for producing multilayer material of enhanced corrosion resistance according to the invention uses materials or alloys having, in accordance with the invention, specific characteristics of electrochemical reaction with the presumed operating environment upon contact therewith that contributes to a passive or active state of the layer materials of the multilayer material. Depending on the chemical and electrochemical activity of the operating environment in contact with one side or both sides of the outer surfaces of the main layers and the internal sacrificial and main layers, including the boundary areas between the layers, different materials or alloys are used for making multilayer materials.

It is common knowledge that the corrosion process develops differently in different materials. Corrosion begins mostly with formation of pitting corrosion focuses in corrosion-resistant materials or alloys. Even an insignificant number of localized surface pitting corrosion focuses, though, disrupts the surface continuity of a structural material and produces channels opening for the operating environment to flow in and deeper corrosion focuses to develop and reduce material strength. General type corrosion develops, as a rule, in materials having a low corrosion resistance and causes destruction of the material body and formation of various corrosion products.

FIG. 1 and FIG. 2 are diagrammatic views of the anodic polarization curve A₁ and cathodic polarization curve K₁ of a corrosion-resistant metal material 1 (metal or alloy) and the anodic polarization curve A₂ and cathodic polarization curve K₂ of another metal material 2 (metal or alloy) having a low corrosion resistance in contact with an operating environment containing aqueous solutions of alkalis, acid salts or acids having anions that are not oxidants (FIG. 1), and with an operating environment containing aqueous solutions of alkalis, acid salts or acids having anions that are oxidants (FIG. 2). The figures also show how the electrochemical potential of materials 1 and 2 depends on the density of polarization current i.

The anodic polarization curve A₁ (FIG. 1) shows that material 1 changes its state during prolonged contact with said environment and, accordingly, its chemical and electrochemical activity defined by its electrochemical potential E in this environment changes, too.

As the anodic potential of material 1 gradually increases due to formation of oxide compounds, anodic current density i declines. The electrochemical potential of material 1 shifts in positive direction from electrochemical stationary potential E_{SP1}** of material 1 to E_{SP1}. The resultant compounds, therefore, produce a protective film inhibiting corrosion of material 1. As oxide compounds are formed, the density of the anodic polarization current drops, the electrochemical potential of material 1 gradually rises to electrochemical overall potential E_{OP1}. Subsequently, while the density of the polarization current remains practically unchanged, the electrochemical potential of material 1 rises from electrochemical overall potential E_{OP1} to electrochemical potential of repassivation E_{PRP1}. Material 1 is in a passive state within this range. The broader the range of E_{OP1} to E_{PRP1} and, at the same time, the lower the polarization current density, the higher the corrosion resistance of material 1 in the operating environment. As corrosion-resistant material 1 reacts further with the operating environment, corrosion begins to develop in the material in the form of pitting corrosion focuses, for example, as a result of nonuniformity of the resultant protective oxide film or surface nonuniformity of material 1, with the electrochemical potential of material 1 increasing beyond E_{PRP1}.

The state of material 1 at the intersection point of the anodic polarization curve A₁ and cathodic polarization curve K₁ is assessed as stationary in respect of dissolution processes of the material as an anode and as a cathode where reducing reactions develop and has a stationary electrochemical potential E_{SP1} in the operating environment and the respective minimum possible corrosion current. With E>E_{SP1}, material dissolution processes begin to prevail gradually in pitting focuses in corrosion-resistant material 1, and with E<E_{SP1}, the prevailing processes are oxygen or hydrogen reduction on material 1. Depending on the effect to be produced during operation of material 1 in the above operating environments, therefore, corrosion resistance of the main structural material layers is to be increased by the guaranteed effect thereon by other sacrificial layers that assure maintenance of material 1 in a near passive state (FIG. 2), preferably near the stationary state characterized by the value of the stationary electrochemical potential E_{SP1}, or in the state of a cathode where a hydrogen ion or an oxygen molecule is to be reduced (FIG. 1).

The pattern of the anodic polarization curves A₁ and cathodic polarization curves K₂ of material 2 having a low corrosion resistance (FIG. 1) shows that material 2 is incapable of passivation in reaction with said environments, and dissolution processes of material 2 prevail, the electrochemical potential of material 2 changing more slowly at a significant polarization current gradient.

The pattern of the anodic polarization curves A₂ and cathodic polarization curves K₂ of material 2 (FIG. 2) having a higher corrosion resistance than material 1 shows that material 2 is in an unchanging state, while material 1 is in a passive state and has a potential value that is the intersection point of the cathodic curve K₂ and the anodic curve A₁ (E_{SP12}).

As materials 1 and 2 react electrochemically with the operating environment, hydrogen is released or oxygen is reduced in the subsurface layer, depending on the composition of the environment. In the presence of reduced oxygen, corrosion current may be caused by dissolution of material 1 or 2, or material passivation as inert chemical compounds that are not easily soluble are formed, and in the presence of atomic hydrogen corrosion is slowed down as reinforcing oxide films reducing the electrochemical potential of the material in said operating environments are formed.

In accordance with the invention, the problem of maintaining structural corrosion-resistant materials in a state of slowly developing pitting corrosion for a considerable length of time has been resolved by developing multilayer materials containing main layers of materials maintained in an equilibrium state in a generally passive material in the materials of the main layers by the dissolution products of the sacrificial layers and corrosion current caused to flow in a specified direction.

FIG. 1 and FIG. 2 illustrate the effect of the sacrificial layers of material 2 on materials 1 of the main structural layers. Depending on whether or not the operating environment contains anions that are oxidants, the main layers of the multilayer material of the invention are made of different materials such that the corrosion resistance of an individual material is not very high, but, in combination with the electrochemical activity of adjacent internal sacrificial layers, helps maintain the main layers in a state of specified passivity.

In particular, the material of the outer main layer in contact with the operating environment is selected, according to the invention, such that the stationary potential E_{SP1} of the material of said layer is in the passivity region of said material reacting with the operating environment, that is, the stationary potential E_{SP1} of material 1 is described by the formula E_{OP1} <E _{SP1} <E_{PRP1}.

A material having a smaller stationary potential than the stationary potential of material 1, E_{SP2}<E_{SP1} (curves A₂ and K₂ in FIG. 1), is selected as material 2 for a multilayer material, according to the invention, that is suitable for operation in reaction with an operating environment having anions that are not oxidants. Under the effect of processes occurring in material 2, the electrochemical potential of material 2 remains higher than the potential of material 1 with the result that the corrosion current is directed toward material 2 in the pitting channels in the area of contact between materials 1 and 2, material 1 being protected. The internal sacrificial layer becomes an anode and begins to dissolve, with the adjacent main layers turning into cathodes.

As the operating environment reaches the boundary surface between material 2 and the internal sacrificial layer, general type corrosion of material 2 begins, material 2 dissolves, and oxygen is reduced on the boundary surface of material 1. A film of oxide compounds is formed, as a result, on the boundary surfaces of material 1, to slow down the pitting process in material 1 of the main layer, the rate at which the operating environment flows through the pitting channels is reduced, and dissolution of material 2 slows down as well. The reaction may continue until the material of the internal sacrificial layer is fully dissolved. The cathodic polarization curve K₁ of material 1 first shifts to the position of the curve K₁* to form an area of equilibrium processes, with pitting focuses developing slowly (area E_{SP1}*), and then, as the protective oxide film is reinforced, it shifts to the position of the curve K₁**, where chemical reaction between material 1 and the operating environment is actually slowed down and corrosion resistance increases as well.

Where, in accordance with the invention, a material having corrosion products of a larger volume than the volume of material in the corrosion focus is used for the main layers, the pitting channels are gradually filled with slag, and pitting corrosion slows down. This process is insufficient to raise corrosion resistance significantly, even though it may, according to the invention, serve as an additional process to increase corrosion resistance of the multilayer material.

Various materials are used as layers of a multilayer material designed, in accordance with the invention, for operation in reaction with an operating environment having anions that are oxidants. As in the preceding example, material 1 of the outer main layer is selected from materials that develop a protective oxide film on reaction with a specified corrosive environment, and the stationary potential of material 1 is within the passivity area of such material, that is, the stationary potential of material 1 is described by the formula E_{OP1} <E _{SP1} <E_{PRP1}. Material 2 is selected so that its stationary electrochemical potential E_{SP2} in contact with the presumed operating environment is within the range from the electrochemical overall potential of material 1 to the electrochemical potential of repassivation of material 1: E_{OP1}<E _{SP2}<E_{PRP1}, in which case the stationary electrochemical potential E_{SP2} is to be higher than the potential of material 1: E_{SP2}>E_{SP1} . Moreover, material 2 of the even sacrificial layer is to have a hydrogen overvoltage lower than that of material 1. In this case, all material 1 of the main layer turns into an anode, and material 2 of the internal sacrificial layer turns into a cathode. As a result, material 2 is dissolved. Reactions occurring in the second layer are described by the curve K₂ that intersects the anodic polarization curve A₁ at a point corresponding to the stationary electrochemical potential E_{SP1} of the system of materials 1 and 2 in material 2 in the area of contact with the pitting channel of material 1. This value is to lie within the range of E_{OP1} to E_{PRP1} of the material of the first layer, and in this case, material 1 reverts to a passive state.

Materials identical to material 1 can be used for the third and successive odd main layers. The third layer will only react with the operating environment when the general corrosion area of the preceding sacrificial layer becomes significant, whereupon the third layer becomes a second anode and will, in accordance with the polarization diagram of FIG. 2, be in a passive state. The reaction will develop at a low rate, because the process is limited to the chemical stage of passive film dissolution. The reactions developing in the third layer are the same as in the first layer. As through pitting channels are formed in the third layer, a corrosion process begins in the fourth layer. This process is similar to the corrosion process in the second sacrificial layer, that is, the fourth layer provides protection for the third and fifth layers. The corrosion process in the successive layers is also similar to the process in the first three layers.

Where the multilayer material is used in simultaneous contact with an operating environment containing aqueous solutions of alkalis, acid salts or acids having anions that are not oxidants on one side of the material and in contact with an operating environment containing aqueous solutions of acid salts or acids having anions that are oxidants on the other side of the material, a multilayer material is formed, according to the invention, by continuous permanent connection of the multilayer material designed for operation in contact, on one side or on both sides thereof, with an operating environment containing aqueous solutions of alkalis, acid salts or acids having anions that are not oxidants with a multilayer material designed for operation in contact, on one side or on both sides thereof, with an operating environment containing aqueous solutions of alkalis, acid salts or acids having anions that are oxidants.

In this case, duration of the corrosion process is estimated to a point when the corrosion focus reaches the central area of the multilayer material on each side of the material. If the corrosion time estimate is identical on each side, continuous permanent connection is effected between one of the surface layers of the multilayer material designed for operation in contact with an operating environment containing aqueous solutions of alkalis, acid salts or acids having anions that are not oxidants and one of the surface layers of the multilayer material suitable, according to the invention, for operation in contact with an operating environment containing aqueous solutions of alkalis, acid salts or acids having anions that are oxidants.

Furthermore, the processes developing on one side of the material are similar to the processes described in the first case, and, on the other side thereof, they are similar to the processes described in the second case.

Where the time it takes corrosion to spread is shorter on the side of the environment containing aqueous solutions of alkalis, acid salts or acids having anions that are not oxidants, an intermediate layer similar to the even layer described in the first case is placed between the layers to be connected, and if the time it takes corrosion to spread on the side of this environment is longer than the time on the opposite side, an intermediate layer similar to the even layer described in the second case is used as a sacrificial layer.

Moreover, a multilayer material according to the invention may be formed as a finished item, for example, a pipe, disk, items of complicated three-dimensional configuration, and items of different cross-sectional shapes, solid or hollow. In need, a ready item made of multilayer material, for example, a plate, ribbon, sheet, or pipe, may be cold- or hot-rolled to obtain the desired dimensions.

And more, the outer layer of the resultant multilayer material may, in accordance with the invention, further be plated with aluminum, preferably by explosion plating, and the resultant plating layer be oxidized thereupon, preferably by micro-arc oxidization.

Following below are examples illustrating the results of tests conducted on several variants of multilayer material of enhanced corrosion resistance of the present invention produced by techniques used to obtain multilayer materials in accordance with the invention.

The composition of the layer materials used is shown in Tables 1 to 6.

**Table 1**

| Layer material | Composition, in % | | | | | | | | | |
|---|---|---|---|---|---|---|---|---|---|---|
| | C | Si | Mn | Cr | Ni | Ti | Fe | S | P | Impurities |
| A | ≤0.08 | ≤0.8 | ≤2.0 | 17.0-19.0 | 9.0-11.0 | 0.7 | Balance | ≤0.020 | ≤0.035 | - |
| B | 0.07-0.14 | ≤0.17-0.37 | 0.35-0.65 | ≤0.15 | ≤0.3 | - | Balance | ≤0.04 | ≤0.035 | ≤0.30 Copper Cu |
| C | ≤0.12 | 0.50-0.80 | 1.30-1.70 | ≤0.30 | ≤0.30 | - | Balance | ≤0.35 | ≤0.040 | ≤0.30 Copper Cu |
| D | ≤0.10 | 0.50-1.0 | 5.0-8.0 | 18.5-22.0 | 8.0-10.0 | 0.6-0.9 | Balance | - | - | - |
| F | 0.14-0.22 | ≤0.05 | 0.3-0.6 | ≤0.3 | ≤0.3 | - | Balance | ≤0.05 | ≤0.04 | ≤0.30 Copper Cu |
| G | 0.06-0.1 | <0.7 | <0.7 | 19-21 | 31-33 | 0.25-0.8 | Balance | <0.02 | <0.03 | 0.1-0.5 A1 |
| H | ≤012 | ≤0.8 | ≤2.0 | 17.0-19.0 | 9.0-11.0 | 0.8 | Balance | ≤0.020 | ≤0.035 | - |
| M | ≤0.25 | 0.5-0.7 | 1.0-2.0 | 21.0-23.0 | 6.0-8.0 | - | Balance | - | - | - |
| N | 0.18-0.23 | 0.17-0.37 | 0.35-0.65 | ≤0.25 | ≤0.25 | - | Balance | ≤0.04 | ≤0.035 | ≤0.25 Cu, ≤0.08 As |

**Table 2**

| Layer material | Composition, in % | | | | | | | | | |
|---|---|---|---|---|---|---|---|---|---|---|
| | Fe | Cu | As | Pb | Zn | Ag | Sb | Bi | Sn | Impurities |
| P | Up to 0.001 | Up to 0.001 | Up to 0.0005 | Min 99.985 | Up to 0.001 | Up to 0.001 | Up to 0.001 | Up to 0.006 | Up to 0.0005 | Total 0.015 |

**Table 3**

| Layer material | Composition, in % | | | | | | | | | |
|---|---|---|---|---|---|---|---|---|---|---|
| | Fe | Si | Mn | Ti | Al | Cu | Mg | Zn | Fe + Si | Impurities |
| R | Up to 0.4 | Up to 0.4 | 0.2-0.6 | Up to 0.1 | 95.3-98.0 | Up to 0.1 | 1.8-8.0 | Up to 0.2 | <0.6 | Total 0.1 |

**Table 4**

| Layer material | Composition, in % | | | | | | | | |
|---|---|---|---|---|---|---|---|---|---|
| | Fe | P | Cu | Pb | Zn | Sb | Bi | Sn | Impurities |
| S | Up to 0.07 | Up to 0.01 | 69.0 71.0 | Up to 0.07 | 27.2-30.0 | to Up to 0.005 | to Up to 0.002 | 1.0-1.5 | Total 0.3 |

**Table 5**

| Layer material | Composition, in % | | | | | | | | | |
|---|---|---|---|---|---|---|---|---|---|---|
| | Fe | Ni, Sn, As | S | Cu | Pb | Zn | Ag | O | Sb | Bi |
| T | Up to 0.005 | Each up to 0.002 | Up to 0.004 | Min 99.9 | Up to 0.005 | Up to 0.004 | Up to 0.003 | Up to 0.05 | Up to 0.002 | Up to 0.001 |

**Table 6**

| Layer material | Composition, in % | | | | | | | | | |
|---|---|---|---|---|---|---|---|---|---|---|
| | Fe | C | Si | Mn | Ni | S | P | Cr | ' Mo | W |
| Q | Up to 1.0 | Up to 0.3 | Up to 0.15 | Up to 1.0 | 59,793-67.5 | Up to 0.012 | Up to 0.015 | 14.5-16.5 | 15.0-17.0 | 3.0-4.5 |

Multilayer materials of this invention were exposed for a long time period to the effect of operating environments. Corrosion resistance C* of a multilayer material of the invention was assessed according to the length of the exposure period until corrosion focuses developed, the existence, nature, and development rate of corrosion focuses in each of the layers in comparison with corrosion resistance Cᵢ of the outer main layer material in contact with such operating environment.

Nondestructive testing technique, for example, holographic interferometry or ultrasonic flaw detection, can be used to monitor corrosion development.

### Example 1

A multilayer material was produced according to the invention for operation in contact on one side thereof with an operating environment containing a 1% aqueous solution of sodium chloride. Corrosion-resistant steel A of a composition shown in Table 1 and having a stationary electrochemical potential E_{SPA} = +0.2 V was used as material for the first outer main layer in contact with the operating environment and the third outer main layer in contact with the ordinary environment. The value of E_{SPA} lay within the range between the electrochemical overall potential E_{OPA} = +0.05 V and the electrochemical potential of repassivation E_{PRPA} = +0.4 V.

High-quality structural carbon steel B having a stationary potential E_{SPB} = -0.44 V lower than E_{SPA} = +0.2 V in the above operating environment was used as material for the internal sacrificial layer.

Three-layer A-B-A blanks measuring 100x1,500x6,000 mm having a layer of corrosion-resistant steel A 10 mm thick on each side thereof and carbon steel B 80 mm thick were produced by explosion welding according to the invention. The blanks were each produced in two steps, one layer of corrosion-resistant steel A being welded to one of the sides of the layer of carbon steel B. The layers (sheets) were welded at a 3 to 7 mm gap between the sheets at an explosive detonation velocity of 2,500 to 2,900 m/sec and mass velocity of 350 to 440 m/sec. The layers of the three-layer material were firmly joined, and no areas of intermediate composition or separation were detected.

Plate-shaped samples of sheets of the ready three-layer material were tested in contact between the outer layer and the above environment - 1% aqueous solution of sodium chloride - for a considerable length of time, 4,350 hours. The condition of materials A of the first outer layer in contact with the operating environment, the second internal layer B, and the third outer layer A facing the common environment was monitored. At the same time, corrosion focuses and the resultant corrosion products of materials A and internal layer boundary surfaces of materials A and B were studied at operating environment temperatures ranging from +5°C to +220°C.

The studies showed that prolonged contact with the operating environment causes pitting corrosion focuses to develop in the first outer layer A of the three-layer material, their number, depth, and area increasing very slowly. As pitting corrosion focuses develop and grow deeper in the first layer A, the operating environment enters the channels of pitting focuses. When a material having corrosion products of a larger volume than the material in a corrosion focus is used as the main layer, the pitting channels are gradually clogged with slag and pitting corrosion slows down.

When the operating environment reaches the boundary surface of the internal sacrificial layer B, general corrosion of material B begins as material B is dissolved and oxygen is reduced on the boundary surface of layer A. In this case, a film of oxide compounds is formed on the boundary surfaces of the material A layer adjoining the boundary surfaces of material B to slow down pitting in the material of the first outer main layer A and destruction of material B of the internal sacrificial layer. The third, outer main layer is untouched by corrosion.

Corrosion resistance of the three-layer material in the above environment is 3 to 5.5 times higher than the corrosion resistance of a similar single-layer material A of the same thickness, depending on the operating environment temperature. High corrosion resistance growth rates are recorded at higher environment temperatures.

### Example 2

A multilayer material of the invention was produced for operation in contact on one side thereof with an operating environment containing a 5% aqueous solution of potassium sulfate at a temperature between +5°C and +220°C. The material had three layers, the outer main layers being made of material D and bonded to the internal sacrificial layer C of low-alloyed steel by mechanized surfacing with a consumable electrode in an environment of inert gases and mixtures. The surfaced outer main layers had a composition identical to that of the consumable electrode - material D - used for surfacing purposes.

The stationary potential of corrosion-resistant steel D in the above operating environment is E_{SPD} = +0.22 V. This value lies within the range between the values of the electrochemical overall potential E_{OPD} = +0.06 V and the electrochemical potential of repassivation E_{PRPD} = +0.45 V. The stationary potential of steel C of the internal sacrificial layer is E_{SPC} = -0.4 V.

The outer main layers D were surfaced in the bottom position with an electrode 2.0 mm in diameter in two steps, with the blank turned over 180°, under the following conditions: surfacing current - 280 to 320 A; surfacing voltage - 26 to 32 V; electrode stick-out distance - 12 to 16 mm, and shielding gas (argon) flow rate - 14 to 18 liters/min. Surfacing was preceded by local heating of the internal sacrificial layer C with a gas burner to a temperature of 550+50°C. Following further finish milling to remove the 2.0 mm allowance, each of the surfaced layers D had a thickness of 5.0 mm for the 20.0 mm thick sacrificial layer of steel C. The D-C-D plates of three-layer material produced as a result measured 30x400x1,000 mm.

Studies have shown that as pitting corrosion develops in the outer main layer D, the operating environment reaches the internal sacrificial layer through pitting channels and general corrosion begins, with steel C starting to dissolve and oxygen released on the boundary surface of the steel D layer. The general corrosion rate of the D-C-D three-layer material in the operating environment is lower by a factor of 1.9 to 2.5 than the corrosion rate of a similar single-layer material D of the same thickness, depending on the operating environment temperature. Significant increases in corrosion resistance occur at higher operating environment temperatures.

### Example 3

A material was produced in accordance with the invention for operation in contact on one side thereof with an operating environment containing a 5% aqueous solution of sulfuric acid at a temperature of +5°C to +80°C. The material had three layers, the outer main layers being made of material P and bonded to the internal sacrificial layer of structural carbon steel F of standard quality.

The stationary potential of the first P layer in the operating environment is E_{SPP} = +0.35 V and is within the range from the electrochemical overall potential E_{OPP} = -0.1 V to the electrochemical potential of repassivation E_{PRPP} = +0.9 V. The stationary potential of steel F in the operating environment is E_{SPF} = -0.5 V.

The multilayer material was produced by manual arc surfacing of material P bars 5.0 mm in diameter onto the surface of a steel F sheet measuring 10x1,500x3,000 mm. Both sides were surfaced in the bottom position, and the blank was turned over 180° under the following conditions: surfacing current - 60 to 80 A and surfacing voltage - 22 to 24 V. The layer P surfacing was 3.0 mm thick on each side.

As corrosion developed in layer P and the operating environment reached the internal sacrificial layer, structural carbon steel F dissolved and hydrogen was released from the boundary surface of the layer P.

Corrosion resistance of the three-layer material P-F-P in the above operating environment was 2.0 to 2.3 times higher than the corrosion resistance of a single-layer material P of identical thickness, depending on the operating environment temperature. Significant increases in corrosion resistance occur at higher operating environment temperatures. As a result, the three-layer material P-F-P also had a significantly higher mechanical strength than a single-layer material P 16.0 mm thick.

### Example 4

A multilayer material was produced in accordance with the invention for operation in contact on one side thereof with an operating environment containing a 5% aqueous solution of hydrochloric acid at a temperature of +5°C to +150°C in the presence of air oxygen. The material had three layers, both outer main layers made of material Q and bonded to an internal sacrificial copper layer T.

The stationary potential of the first outer layer Q in the operating environment is E_{SPQ} = +0.05 V and lies within the range from the electrochemical overall potential E_{OPQ} = - 0.05 V to the electrochemical potential of repassivation E_{PRPQ} = +0.4 V. The stationary potential of the material T in the operating environment is E_{SPT} = +0.1 V.

The multilayer material was produced in the following sequence of steps. First, explosion welding was effected at an explosive detonation velocity of 2,500 to 2,900 m/sec, the gap of 2.0 to 4.0 mm between the sheets, and mass velocity of 320 to 360 m/sec. Bimetallic Q-T blanks were then made from sheets measuring 3x1,000x2,000 mm, with the layer Q 1.0 mm thick. The resultant bimetallic blanks thus produced were then heated to a temperature of 500°C to 540°C and both bimetallic Q-T blanks, with the copper layer T facing inside, were rolled together at a 100% reduction.

As corrosion developed and the operating environment reached the internal sacrificial layer T, oxygen was reduced, releasing a hydroxide ion that formed, together with the dissolved metal of the first layer Q, a passive film that reduced significantly the pitting corrosion of the main layer Q.

Corrosion resistance of the three-layer material Q-T-Q in the above operating environment was 7.0 to 9.5 times higher than corrosion resistance of the single-layer material Q 3.0 mm thick, depending on the operating environment temperature. High corrosion resistance increases occur at higher operating environment temperatures.

### Example 5

A multilayer material was produced according to the invention for operation in contact, on both sides thereof, with an operating environment containing a 20% solution of potassium nitrate at a temperature ranging from +5°C to +150°C. The material had five layers - odd main layers of material G and even sacrificial layers of brass S.

The stationary potential of the odd layer material G was E_{SPG} = -0.23 V in the operating environment and lay within the range from the electrochemical overall potential E_{OPG} = - 0.75 V to the electrochemical potential of repassivation E_{PRPG} = -0.04 V. The stationary potential of material S in the operating environment was E_{SPS} = -0.3 V.

The multilayer material was produced by manual argon arc surfacing with a nonconsumable electrode and diffusion welding in vacuum.

Manual argon arc surfacing with a nonconsumable electrode of brass S was used for alloy G to produce a layer of brass S 1.2 mm thick on each layer of alloy G, whereupon the brass layer was ground off to a depth of 0.2 mm. After each layer of alloy S was ground off, its thickness was 1.0 mm. The third layer of alloy G was surfaced on both sides with brass S.

Surfacing was effected in the bottom position by direct-polarity direct current with a nonconsumable tungsten electrode 3 mm in diameter with a lanthanum oxide additive using material S additive wire 1.6 mm in diameter by surfacing current of 120 to 160 A, surfacing voltage of 18 to 22 V, electrode stick-out distance of 5 to 7 mm, and shielding gas (argon) flow rate of 12 to 16 liters/min.

The surfaced layers of brass S were bonded to one another by diffusion welding in vacuum at a temperature of 650°C+20°C, contact pressure of 1.0 to 1.2 MPa, residual pressure of 1.0x10⁻⁴ mm Hg, and welding time of 1.5 to 2 hours. The final blanks measured 7x200x600 mm.

As corrosion develops and the operating environment reaches the internal sacrificial layer on any side, oxygen is reduced on brass S to produce a hydroxide ion that forms a passive layer with dissolved metal G of the odd main layers and, as a result, pitting corrosion of these layers diminishes significantly. Corrosion resistance of the multilayer material G-S-G-S-G in the operating environment is between 7.0 and 15.0 times that of material G 7.0 mm thick.

Production of five-layer materials G-S-G-S-G by the method of the invention makes said material highly resistant to corrosion.

### Example 6

A multilayer material of the invention was produced for operation in contact on both sides thereof with an operating environment containing a 50% solution of nitric acid at a temperature between +5°C and +110°C. The material had three layers - odd main layers of corrosion-resistant steel H, and an even sacrificial layer of aluminum R.

The stationary potential of the odd layer material H in the operating environment is E_{SPH} = +0.2 V and lies within the range from the electrochemical overall potential E_{OPH} = +0.1 V to the electrochemical potential of repassivation E_{PRPH} = +0.35 V. The stationary potential of material R in the operating environment is E_{SPR} = +0.25 V.

Two bimetallic blanks H-R measuring 2x1,000x2,000 mm having a layer R 1.0 mm thick on a layer of corrosion-resistant steel H were produced by argon arc surfacing by welding wire 1.6 mm in diameter, surfacing current of 180 to 260 A, surfacing voltage of 24 to 28 V, and shielding gas flow rate of 15 to 20 liters/min. The bimetallic blanks were arranged with the aluminum layer facing inside and rolled together at a 100% reduction. As corrosion developed and the operating environment reached the even sacrificial layer, aluminum R dissolved by first forming a passive oxide film, with hydrogen released on the steel H layer.

The method for producing three-layer materials H-R-H according to the invention is intended to produce a material having a high corrosion resistance, high mechanical characteristics because of the small area of the thermal effect of surfacing, and a high strength and uniformity of the even layer structure. Corrosion resistance of the multilayer material in an operating environment is 5.0 to 7.0 times higher than that of the alloy H of identical thickness, depending on the operating environment temperature. High increases in corrosion resistance occur at higher operating environment temperatures.

### Example 7

A five-layer material produced according to the invention is designed for operation in contact with a 50% solution of nitric acid on one side thereof (the environment contains anions that are oxidants) and a 1% aqueous solution of sodium chloride on the other side (the environment does not contain anions that are oxidants).

The odd main layers - the first layer in contact with an operating environment that is a 50% solution of nitric acid and the third layer of the multilayer material - are made of corrosion-resistant steel M having in said environment a stationary potential E_{SPM1} = +0.15 V. This value is within the range from the electrochemical overall potential E_{O}p_{M}=+0.1 V to the electrochemical potential of repassivation E_{PRPM} = +0.3 V. Aluminum alloy R having a stationary potential E_{SPR} = +0.2 V in the above environment was chosen for material of the even (second) sacrificial layer on the side of nitric acid.

The outer, fifth layer in contact with the 1 % aqueous solution of sodium chloride is similar to the first and third layers in composition. Corrosion-resistant steel M has a stationary potential

E_{SPM} = +0.18 V in the environment of the 1% aqueous solution of sodium chloride. This value lies within the range of values between the electrochemical overall potential E_{OPM} = +0.04 V and the electrochemical potential of repassivation E_{PRPM} = +0.35 V.

The fourth layer placed on the side of the sodium chloride solution is made of structural carbon steel N. The material of the fourth steel N layer placed in the environment of sodium chloride solution has a stationary potential E_{SPN} = -0.42 V.

The method for producing the multilayer material comprised argon arc surfacing of layer R onto corrosion-resistant steel M of the first and third layers, explosion welding of corrosion-resistant steel M and steel N between the third, fourth, and fifth layers, and rolling at a 100% reduction.

Blanks for the third, fourth, and fifth layers M-N-M measuring 100x1,500x6,000 mm, with a layer of corrosion-resistant steel M 10 mm thick on each side were produced by explosion welding. The blanks were welded in two steps, each step comprising surfacing one layer of corrosion-resistant steel M on one side thereof with a layer of carbon steel N.

A layer of corrosion-resistant steel M was explosion-welded to a layer of steel N in approximately the following conditions: explosive detonation velocity - 2,600 to 2,800 m/sec, the gap between the sheets - 4 to 8 mm, and mass velocity - 360 to 420 m/sec.

The free surface of the third layer and one of the surfaces of the first layer of steel M were surfaced with the material of the second layer R 2.0 mm thick on each side thereof.

Corrosion-resistant steel was surfaced by argon arc with the layer R approximately in the following conditions: welding wire diameter - 1.6 mm, surfacing current - 180 to 260 A, surfacing voltage - 24 to 28 V, and shielding gas flow rate - 15 to 20 liters/sec.

At the final stage, the bimetallic blanks were placed with the surfaced aluminum layer facing inside and rolled together at a 100% reduction.

As corrosion developed and the operating environments reached the internal sacrificial layer on the side of contact thereof with nitric acid, alloy R was dissolved and hydrogen released on the alloy M layer. As the operating environment reached the fourth layer on the side of contact with sodium chloride solution, alloy N was dissolved and hydrogen released or oxygen reduced and a passive film formed on alloy M.

The method used according to the invention to produce five-layer materials M-R-M-N-M to obtain continuous permanent connection between the layers of specified materials having desired chemical and electrochemical activity helps achieve high corrosion resistance, high mechanical characteristics, a small area of thermal effect of aluminum surfacing, and uniformity of its structure. Corrosion resistance of the multilayer material in the above environment is 15.0 to 20.0 times higher than that of material M of identical thickness under the same conditions.

The test results of the multilayer materials produced as described in Examples 1 to 7 are shown in Table 7.

**Table 7**

| Example number | Operating environment | Corrosion resistance C* of material of the invention | Structure of the multilayer material of the invention | Layer material (corrosion resistance C¡ of main layer material in the specified environment, for comparison) | E_{SPi}, B | E_{OPi}, B | E_{PRPi}, B |
|---|---|---|---|---|---|---|---|
| 1 | 1 % aqueous solution of NaCl | 3.0-5.5 C_{A} | A-B-A | A - corrosion-resistant steel (C_{A} = 1.0) | +0.2 | +0.05 | +0.4 |
| | | | | B - carbon steel | -0.44 | - | - |
| 2 | 5% aqueous solution of K₂SO₄ | 1.9-2.5 C_{D} | D-C-D | D - corrosion-resistant steel (C_{D} = 1.0) | +.0.22 | +0.06 | +0.45 |
| | | | | C - low-alloyed steel | -0.4 | - | - |
| 3 | 5% aqueous solution of H₂SO₄ | 2.0-2.3 C_{P} | P-F-P | P - lead (C_{P} = 1.0) | +0.35 | -0.1 | +0.9 |
| | | | | F - carbon steel | -0.5 | - | - |
| 4 | 5% aqueous solution of HCl | 7.0-9.5 C_{Q} | Q-T-Q | Q - nickel-chromium-molybdenum alloy (C_{Q} = 1.0) | +0.05 | -0.05 | +0.4 |
| | | | | T - copper | +0.1 | - | - |
| 5 | 20% solution of KNO₃ | 7.0-15.0 C_{G} | G-S-G-S-G | G - chromium-nickel alloy (C_{G} = 1.0) | -0.23 | -0.75 | -0.04 |
| | | | | S - brass | -0.3 | - | - |
| 6 | 50% solution of HNO₃ | 5.0-7.0 C_{H} | H-R-H | H - corrosion-resistant steel (C_{H} = 1.0) | +0.2 | +0.1 | +0.35 |
| | | | | R - aluminum | +0.25 | - | - |
| 7 | 50% solution of HNO₃ on one side and 1 % aqueous solution of NaCl on the other side | 15.0-20.0 C_{M} | M-R-M-N-M | M - corrosion-resistant steel (C_{M} = 1.0) | +0.15 +0.18 | +0.10 +0.04 | +0.30 +0.35 |
| | | | | | Note:The numerator shows values related to operating environment on one side and the denominator gives values related to operating environment on the other side. | | |
| | | | | N - carbon steel | -0.42 | - | - |
| | | | | R - aluminum | +0.2 | - | - |

Table 7 shows that multilayer materials of the invention produced by methods according to the invention for operation in contact, on one side or on both sides thereof, with specified operating environments during operating tests have a corrosion resistance significantly higher than the corrosion resistance of single-layer materials of identical thickness made of a single material.

Production of multilayer materials according to the invention in which the layers are materials having, in contact with a specified operating environment, a desired electrochemical and chemical activity is suited for making structural materials having a high corrosion resistance and relatively thin layers and material as a whole, using economically reasonable combinations of materials of main and sacrificial layers.

Furthermore, variations and improvements may be made in the method for producing multilayer material of enhanced corrosion resistance designed for operation in contact, on one side or on both sides thereof, with an operating environment, and in the multilayer material produced in accordance with the invention, without departing from the spirit and scope of the invention. For example, it will be clear to those skilled in the art of electrochemistry and metallurgy that, depending on the conditions in which the multilayer material is used, several sacrificial layers may be used between the main layers, in particular, to lower the costs of the material without affecting the corrosion resistance thereof.

### Industrial applicability

Multilayer materials of enhanced corrosion resistance according to the invention may be produced by methods in accordance with the invention by using widely known techniques and equipment such that, depending on the desired properties of materials of the layers of structures made for operation in a specified corrosive environment, multilayer materials may have different types of layers used in different sequences. No less important are the costs of the material contributing to the desired corrosion resistance. Multilayer materials according to the invention may be used in various manufacturing industries.

## Claims

1. A multilayer material of enhanced corrosion resistance comprising alternating odd and even layers placed on one another and joined by continuous permanent connection **characterized in that**, said material:
- being designed for operation in contact, on one side or on both sides thereof, with an operating environment containing aqueous solutions of alkalis, acid salts or acids having anions that are not oxidants, and comprising odd layers as main layers and even layers as sacrificial layers, wherein:
- the odd outer and internal layers made of metals or alloys having, in contact with said operating environment, a stationary electrochemical potential within the range from the electrochemical overall potential to the electrochemical potential of repassivation; and
- the even internal layers made of metals or alloys having, in contact with said operating environment, a stationary electrochemical potential lower than the stationary electrochemical potential of the adjacent odd layers in the same conditions.

2. A multilayer material of enhanced corrosion resistance comprising alternating odd and even layers placed on one another and joined by continuous permanent connection **characterized in that**, said material:
- being designed for operation in contact, on one side or on both sides thereof, with an operating environment containing aqueous solutions of alkalis, acid salts or acids having anions that are oxidants, and comprising odd layers as main layers and even layers as sacrificial layers, wherein:
- the odd outer and internal layers made of metals or alloys having, in contact with said operating environment, a stationary electrochemical potential within the range from the electrochemical overall potential to the electrochemical potential of repassivation; and
- the even internal sacrificial layers made of metals or alloys having, in contact with said operating environment, a stationary electrochemical potential higher than the electrochemical potential of the metal or alloy of an outer layer in the same conditions and having a value ranging from the electrochemical overall potential of the outer layer material to the electrochemical potential of repassivation of the outer layer material, and also having a lower hydrogen overvoltage than the materials of the odd layers.

3. A multilayer material of enhanced corrosion resistance comprising alternating odd and even layers joined together by continuous permanent connection **characterized in that**, said material:
- being designed for operation in simultaneous contact between its first odd outer layer and a first operating environment containing aqueous solutions of alkalis, acid salts or acids having anions that are not oxidants and contact between its second even outer layer and a second operating environment containing aqueous solutions of alkalis, acid salts or acids having anions that are oxidants, and having odd layers as main layers and even layers as sacrificial layers, wherein:
- the first odd outer layer and the even internal layer nearest it are made of metals or alloys having, in contact with the presumed first operating environment, a stationary electrochemical potential within the range from the electrochemical overall potential to the electrochemical potential of repassivation;
- the even internal layer adjoining the first odd outer layer is made of metals or alloys having, in contact with the presumed first operating environment, a stationary electrochemical potential lower than the stationary electrochemical potential of the adjacent odd layers in the same conditions;
- the second odd outer layer and the odd internal layer nearest it are made of metals or alloys having, in contact with the presumed second operating environment, a stationary electrochemical potential within the range from the electrochemical overall potential to the electrochemical potential of repassivation; and
- the even internal layer adjoining the second odd outer layer and other even layers adjoining the odd internal layers are made of metals or alloys having, in contact with the presumed second operating environment, a stationary electrochemical potential higher than the electrochemical potential of the metal or alloy of the second outer layer in the same conditions and a value within the range from the electrochemical overall potential of the material of the second outer layer to the electrochemical potential of repassivation of the material of the second outer layer, and also having a lower hydrogen overvoltage than the materials of the adjacent odd layers.

4. A material as claimed in any of claims 1, or 2, or 3, **wherein** the outer layer further contains a plating layer of oxidized aluminum.

5. A material as claimed in any of claims l, or 2, or 3, **wherein** the material is produced in the form of sheets, plates, ribbons, strips, L-bars, channel bars, 1-bars, disks, rods of various sectional shapes, pipes of various sectional shapes, rings, open-shape or closed solid-shape structural products, or hollow-shape design outlines.

6. A method for producing a multilayer material of enhanced corrosion resistance comprising forming a continuous permanent connection of layers made of metals and/or alloys thereof and placed one layer upon another, **characterized in that** said method:
- being designed for producing a multilayer material of enhanced corrosion resistance in contact, on one side or on both sides thereof, with an operating environment containing aqueous solutions of alkalis, acid salts or acids having anions that are not oxidants, wherein:
- the material of the odd layers comprises metals or alloys having, in contact with the presumed operating environment, a stationary electrochemical potential within the range from the electrochemical overall potential to the electrochemical potential of repassivation; and
- the material of the even layers comprises metals or alloys having, in contact with said operating environment, a stationary electrochemical potential lower than the stationary electrochemical potential of adjacent odd layers in the same conditions.

7. A method for producing a multilayer material of enhanced corrosion resistance comprising forming a continuous permanent connection of layers made of metals and/or alloys thereof and placed one layer upon another, **characterized in that** said method:
- being designed for producing a multilayer material of enhanced corrosion resistance in contact, on one side or on both sides thereof, with an operating environment containing aqueous solutions of alkalis, acid salts or acids having anions that are oxidants, wherein:
- the material of the odd outer and internal layers comprises metals or alloys having, in contact with the presumed operating environment, a stationary electrochemical potential within the range from the electrochemical overall potential to the electrochemical potential of repassivation; and
- the material of the even internal layers comprises metals or alloys having, in contact with said operating environment, a stationary electrochemical potential higher than the electrochemical potential of the metal or alloy of the outer layer in the same conditions and having a value ranging from the electrochemical overall potential of the outer layer material to the electrochemical potential of repassivation of the outer layer material, and also having a lower hydrogen overvoltage than the materials of the odd layers.

8. A method for producing a multilayer material of enhanced corrosion resistance comprising forming a continuous permanent connection of layers made of metals and/or alloys thereof and placed one layer upon another, **characterized in that** said method:
- being designed for producing a multilayer material of enhanced corrosion resistance in simultaneous contact between the first outer layer thereof and a first operating environment containing aqueous solutions of alkalis, acid salts or acids having anions that are not oxidants and contact between the second outer layer thereof and a second operating environment containing aqueous solutions of alkalis, acid salts or acids having anions that are oxidants; and
- being used to form a continuous permanent connection of materials of at least five layers, wherein:
- the material of the first outer layer comprises metals or alloys having, in contact with the presumed first operating environment, a stationary electrochemical potential within the range from the electrochemical overall potential to the electrochemical potential of repassivation;
- the material of the even internal layer adjoining the first outer layer comprises metals or alloys having, in contact with the presumed first operating environment, a stationary electrochemical potential lower than the stationary electrochemical potential of the adjacent odd layers in the same conditions;
- the material of the second outer layer comprises metals or alloys having, in contact with the presumed second operating environment, a stationary electrochemical potential within the range from the electrochemical overall potential to the electrochemical potential of repassivation;
- the material of the even internal layer adjoining the second outer layer and the material of the even layers adjoining the odd internal layers comprise metals or alloys having, in contact with the presumed second operating environment, a stationary electrochemical potential higher than the electrochemical potential of the second outer layer metal or alloy in the same conditions, and having a value ranging from the electrochemical overall potential of the material of the second outer layer to the electrochemical potential of repassivation of the second outer layer, and also a lower hydrogen overvoltage than the materials of the adjacent odd layers.

9. A method as claimed in claim 8, **wherein** the continuous permanent connection of the materials of the layers is produced by joining one of the outer layers of the first multilayer material designed for operation in contact on both sides thereof with a first operating environment and one of the outer layers of the second multilayer material designed for operation in contact on both sides thereof with a second operating environment.

10. A method as claimed in any of claims 6, or 7, or 8, **wherein** the materials of the even layers comprise metals or alloys further creating, in contact with a presumed operating environment, corrosion products of a larger volume than the volume of the metal or alloy in the layer before corrosion.

11. A method as claimed in any of claims 6, or 7, or 8, wherein said continuous permanent connection between said even and odd layers is formed by explosion welding and/or diffusion welding in vacuum, in inert gases, or in reducing gases; and/or by high-frequency welding; and/or welding by rolling; and/or manual arc surfacing; and/or mechanized surfacing with a consumable electrode by solid or flux-core wire in inert gases and mixtures; and/or automatic argon arc surfacing; and/or automatic surfacing with a ribbon electrode under flux; and/or automatic surfacing with a wire electrode under flux; and/or automatic surfacing with flux-core wire in active or inert gases and in mixtures thereof; and/or automatic surfacing with self-protecting flux-core wire or ribbon; and/or electroslag surfacing; and/or plasma surfacing with solid section or flux-core wire; and/or gas surfacing; and/or induction heating surfacing.

12. A method as claimed in any of claims 6, or 7, or 8, **wherein** the outer layer of the resultant multilayer material is further plated with aluminum, preferably by explosion plating, and the resultant plating layer is then oxidized, preferably by micro-arc oxidization.

13. A method as claimed in any of claims 6, or 7, or 8, **wherein** multilayer materials are produced in the shape of sheets, plates, ribbons, strips, L-bars, channel bars, I-bars, disks, rods of various sectional shapes, pipes of various sectional shapes, rings, open-shape structural, or closed solid-shape products, or hollow-shape design outlines.
